# EUROPÄISCHE PATENTANMELDUNG

(11) **EP 1 374 671 A1**
(43) Veröffentlichungstag der Anmeldung: **02.01.2004**
(21) Anmeldenummer: 03012334.3
(22) Anmeldetag: 30.05.2003
(51) Int. Cl.: A01K 1/035

(54) **Liegeunterlage zur Inaktivierung von Ektoparasiten und damit ausgestattete Liegevorrichtungen**

(30) Priorität: 13.06.2002 AT 8972002
(71) Anmelder: Neufeld, Klaus, DDr., 2532 Heiligenkreuz (AT)
(72) Erfinder: Neufeld, Klaus, DDr., 2532 Heiligenkreuz (AT)
(74) Vertreter: Grabherr, Claudia, Dipl.Ing.

(57) **Zusammenfassung**

Die vorliegende Erfindung betrifft eine Liegevorrichtung zur Inaktivierung von Ektoparasiten, insbesondere für die Liegestellen von Tieren, mit einer Auflagefläche für das Tier, welche Liegevorrichtung dadurch gekennzeichnet ist, dass in der Auflagefläche eine Liegeunterlage vorgesehen ist, welche die von dem Tier herabfallenden Ektoparasiten bzw. deren Entwicklungsstadien inaktiviert, wobei die Liegeunterlage eine Auflageschicht mit im Wesentlichen nach unten verlaufenden Poren bzw. Kanälen für die Aufnahme der Ektoparasiten bzw. ihrer Entwicklungsstadien und gegebenenfalls von Hautbestandteilen des Tieres aufweist, welche Poren bzw. Kanäle an ihrem unteren Ende gegebenenfalls an einer Klebeschicht enden, und die Liegeunterlage zur Inaktivierung von Ektoparasiten.

## Beschreibung

Die vorliegende Erfindung betrifft eine Liegeunterlage zur Inaktivierung von Ektoparasiten, insbesondere Flöhen, und mit einer solchen Liegeunterlage ausgestattete Liegevorrichtungen.

Bei Flöhen handelt es sich um flügellose Insekten der Ordnung Siphonaptera. Flöhe sind 1,5-4 mm lang, der meist braun gefärbte Körper ist seitlich stark abgeplattet, sie sind mit stechend-saugenden Mundwerkzeugen ausgestattet. Am Kopf und ersten Brustsegment können Stachelkämme ausgebildet sein, welche differentialdiagnostisch verwertbar sind. Wie alle Insekten besitzen Flöhe drei Beinpaare, wobei das dritte Beinpaar zu Sprungbeinen ausgebildet ist.

Der weibliche Floh beginnt ein bis vier Tage nach der ersten Blutmahlzeit mit der Ablage von durchschnittlich 25 entwicklungsfähigen Eiern pro Tag. Die Floheier bleiben im Fell des Wirtes kleben, solange sie noch feucht sind. Nach wenigen Stunden fällt der Großteil der Eier im Tierlager ab, wo die Entwicklungsstadien auch die besten Überlebenschancen vorfinden. Die aus dem Ei schlüpfende Larve bewegt sich negativ phototrop, d.h. lichtscheu, und positiv geotrop, d.h. in Richtung Erdanziehung. Dies und die Thigmotaxis, das ist eine Orientierungsbewegung, die durch einen Berührungsreiz ausgelöst wird, veranlasst die Larve, sich bevorzugt am Grund von Teppichen oder anderen Geweben zu verstecken, wo sie bestens geschützt ist. Die Flohentwicklungsstadien, besonders die Larvenstadien, stellen hohe Ansprüche an Temperatur und relative Luftfeuchtigkeit. Bevorzugte Temperaturverhältnisse liegen bei 25-30°C bei eine relativen Luftfeuchtigkeit von 65 - 85 %. Weiters sind Flohlarven obligat auf das Vorhandensein von Kot adulter Flöhe angewiesen. Flohkot enthält viel unverdautes Blut, adulte Flöhe nehmen täglich mehr als das 15fache ihres Körpergewichtes auf, benötigen selbst aber nur einen Bruchteil davon. Der größte Teil wird unverdaut ausgeschieden, offensichtlich um den Larven als Nahrung zu dienen. Flohlarven sind auf diesem Weg indirekt parasitierend, ohne Blutmahlzeit verhungern sie innerhalb von vier Tagen. Aus dem Erwähnten geht eindeutig hervor, dass das Lager des Wirtstieres die besten Voraussetzungen für eine kontinuierliche Vermehrung der Flohpopulation bietet. Optimale Temperatur- und Luftfeuchtigkeitsverhältnisse sowie Nahrung in großem Ausmaß sind vorhanden. Nach zwei Häutungen verpuppt sich die Larve, der adulte Floh schlüpft aufgrund von Druck- und Temperaturreizen z.B. durch ein im Körbchen schlafendes Tier. Hat der adulte Floh einen Wirt gefunden, beginnt er sofort seine Blutmahlzeit. Weibliche wie auch männliche Flöhe werden erst durch eine Blutmahlzeit fruchtbar. Sobald ein Floh einmal gesaugt hat, muss er sich einem ständigen Kreislauf von Reproduktion und Nahrungsaufnahme unterwerfen. Während adulte Flöhe vor ihrer ersten Blutmahlzeit bis zu 62 Tage überleben können, sterben jene Flöhe, die schon einmal gesaugt haben, innerhalb weniger Tage ab, wenn sie von ihrem Wirt entfernt werden. Daraus ergibt sich, dass ein Wirt den Großteil der auf ihm parasitierenden Flohpopulation aus frisch geschlüpften Flöhen requiriert, ein Wechsel zwischen Wirten findet nur im Ausmaß von ca. 10 % statt.

Flöhe sind jene Ektoparasiten mit der weitesten geographischen Verbreitung, sie sind die häufigsten Ektoparasiten unserer Heimtiere, aber auch auf Nutz- und Wildtieren beinahe weltweit von großer Bedeutung. Zur Zeit sind mehr als 2000 Floharten und Unterarten beschrieben, besonders häufig treten der Katzenfloh *Ctenocephalides felis,* der Hundefloh *Ctenocephalides canis* aber auch der Menschenfloh *Pulex irritans* auf. Flöhe sind nicht nur Lästlinge, sie sind auch als Überträger des Gurkenkernbandwurms *(Dipylidium caninum)* sowie als Auslöser der Flohspeicheldermatitis im Bereich der Veterinärmedizin von großer Bedeutung. Durch Flohspeichel ausgelöste Dermatitis zählt zu den häufigsten Vorstellungsgründen von Hunden in tierärztlichen Praxen, 35 % aller tierärztlichen Konsultationen sind durch Flohbefall und daraus resultierenden Erkrankungen begründet, und jeder zweite Fall von dermatologischen Problemen bei Heimtieren steht in Zusammenhang mit Flohbefall. Für die menschliche Gesundheit stellt der Floh als Überträger des Gurkenkernbandwurms, von Viren und Bakterien wie beispielsweise *Rickettsia spp., Brucella spp.* und dem Pesterreger *(Yersinia pestis)* ein Gefährdungspotential dar. Die jährlichen Ausgaben für Produkte zur Flohbekämpfung erreichen in den Vereinigten Staaten eine Milliarde Dollar und machen 30 % des Gesamtumsatzes des Heimtiermarktes aus.

In Klimaregionen mit mildem Winter bestehen ganzjährig geeignete Bedingungen zur Flohvermehrung, aber auch in kühlen Klimaten erstreckt sich die Problematik aufgrund von Haltungsbedingungen in beheizten Wohnräumen auf das gesamte Jahr.

Eine effiziente Flohbekämpfung muss einerseits auf die adulten Flöhe ausgerichtet sein, die beispielsweise mittels Pyrethrinen, Pyrethroiden, Permethrin, Diazinon, Dichlorvos, Fenthion, Carbaryl, Imidacloprid oder Ivermectin in Form von Halsbändern, Shampoos, Sprays, Spot-on-Präparaten oder dem Wirtstier zu verabreichenden Injektionslösungen unschädlich gemacht werden. Ebenso wichtig ist aber auch, die Flohentwicklungsstadien unschädlich zu machen. Man geht allgemein davon aus, dass 95% der gesamten Flohpopulation von Entwicklungsstadien gebildet werden, die in der Umgebung des Tieres, insbesondere in dessen Lager heranwachsen. Für die Behandlung der Umgebung wird im Allgemeinen gründliches Aufwaschen, Staubsaugen mit anschließendem Wechsel des Staubsaugerbeutels, Maschinenwäsche und die Anwendung von Insektiziden (Umgebungsspray etc.) empfohlen. Gerade beim wichtigsten Glied in der Kette der Flohentwicklung, nämlich dem Tierlager, sind diese Empfehlungen kaum in ausreichendem Maß durchführbar, so sind herkömmliche Körbe oder andere Schlafstätten für Heimtiere entweder überhaupt nicht waschbar, oder nur der Überzug ist für die Maschinenwäsche geeignet. Besteht der Formkörper aus Schaumstoff, ist dieser nach einem Reinigungsversuch schimmelpilzgefährdet. Einer Flohbekämpfung mit Giftstoffen steht eine Vielzahl von Konsumenten insbesondere im Wohnbereich, im Tierlager oder in der Gegenwart von Kindern kritisch gegenüber. Weiters sind die Entwicklungsstadien nur schwer angreifbar, da Larven zum einen eine doppelt so hohe Insektizidtoleranz aufweisen wie adulte Flöhe und sich des Weiteren so gut versteckt halten, dass sie mittels Sprays schwer erreichbar sind. Das Puppenstadium ist durch Insektizidsprays überhaupt nicht angreifbar. Gerade der am weitesten verbreitete und am häufigsten auf unseren Heimtieren parasitierende Floh, der Katzenfloh *Ctenocephalides felis,* hat bereits beachtliche Resistenzen gegenüber Insektiziden entwickelt. Es wäre daher wünschenswert, zumindest einen bedeutenden Teil der Parasitenbekämpfung, insbesondere bei Heimtieren, mittels giftfreier Verfahren zu erreichen.

Aus US 5 226 384 ist ein gegen Flohbefall resistentes Tierlager bekannt, das eine für Feuchtigkeit und Insekten undurchlässige äußere Umhüllung aus Aramid, wie beispielsweise Kevlar^{TM}, aufweist, unter der gegebenenfalls eine Lage aus Polyestermaterial, beispielsweise Mylar^{TM}, vorgesehen ist, welche die Reißfestigkeit erhöht und weiter zur niedrigen Permeabilität beiträgt.

US 5 002 014 beschreibt eine teilweise mit Kügelchen aus Polystyrolschaum gefüllte Tiermatte, deren äußere Umhüllung aus einem Maschenmaterial hergestellt ist, welches aus mit einem Polyvinylmaterial beschichteten Polyestersträhnen gewebt ist. Durch die Beschaffenheit des Materials soll verhindert werden, dass Flöhe und Zecken Überlebensbedingungen, insbesondre Nahrung, vorfinden, sodass die Reproduktion der Ektoparasiten unterbunden wird. Das Problem des erneuten Befalls des Tieres durch Insekten, welche die Matte wieder verlassen, wird nicht erörtert.

US 5 662 065 beschreibt eine Liegevorrichtung für Tiere, bei der eine für die Aufnahme der Ektoparasiten vorgesehene Kammer an der Oberseite mittels eines hängemattenartigen Vlieses abgedeckt ist. Am Boden der Kammer können Substanzen zum Abtöten der Insekten, wie beispielsweise eine Mischung von Zedernspänen und Diatomeenerde, vorhanden sein.

In den US-Patenten 4 649 861 bzw. 4 852 517 wird eine Liegematte für Tiere beschrieben, die aus einer für Insekten durchlässigen Oberschicht besteht und einer mit einem Klebstoff mit "Dauerklebrigkeit" ausgestatteten Mittelschicht. Der Erfinder geht fälschlicherweise von der Annahme aus, dass erwachsene Flöhe vom Tier in das Tierlager wandern, um sich dort fortzupflanzen. Wie in der Einleitung erwähnt, ist diese Vermutung nach neuesten wissenschaftlichen Erkenntnissen jedoch falsch. Im Lager des Tieres befinden sich nur die von den Tierhaaren herabfallenden Eier, die sich dann über das Larven- und Puppenstadium zu adulten Flöhen entwickeln, die dann wiederum das Wirtstier befallen.

Es besteht Bedarf an Liegeunterlagen zur effizienten Inaktivierung von Ektoparasiten, wie Flöhen, und an damit ausgestatteten Liegevorrichtungen. Die vorliegende Erfindung löst diese Aufgabe mit einer Liegeunterlage, die durch ihren Aufbau geeignet ist, die Entwicklung von Flöhen zu unterbrechen, und mit einer damit ausgestatteten Liegevorrichtung.

Die Erfindung schlägt eine Liegevorrichtung zur Inaktivierung von Ektoparasiten, insbesondere für die Liegestellen von Tieren, mit einer Auflagefläche für das Tier vor, welche Liegevorrichtung dadurch gekennzeichnet ist, dass in der Auflagefläche eine Liegeunterlage vorgesehen ist, welche die von dem Tier herabfallenden Ektoparasiten bzw. deren Entwicklungsstadien inaktiviert, wobei die Liegeunterlage eine Auflageschicht mit im Wesentlichen nach unten verlaufende Poren bzw. Kanälen für die Aufnahme der Ektoparasiten bzw. ihrer Entwicklungsstadien und gegebenenfalls von Hautbestandteilen des Tieres aufweist, welche Poren bzw. Kanäle an ihrem unteren Ende gegebenenfalls an einer Klebeschicht enden.

Gemäß einem weiteren Merkmal der Erfindung haben die Poren bzw. Kanäle in der Auflageschicht der Liegeunterlage an der körperzugewandten Seite einen kleineren Querschnitt als an der körperabgewandten Seite, sodass Floheier bzw. -larven an der körperzugewandten Seite in die Auflageschicht eindringen, erwachsene Flöhe aber nicht aus der Liegeunterlage heraus können.

Gemäß einem weiteren Merkmal der Erfindung kann an der körperabgewandten Seite der Auflageschicht eine für sämtliche Flohentwicklungsstadien undurchlässige Unterlagsschicht angeordnet sein. Diese Unterlagsschicht kann gegebenenfalls auf der körperabgewandten Seite rutschsicher ausgestaltet sein. Die Unterlagsschicht und die Auflageschicht können im Randbereich verbunden und der gesamte Aufbau dort dicht abgeschlossen sein, was beispielsweise durch Vernähen oder Verschweißen erreicht werden kann, damit Entwicklungsstadien oder adulte Flöhe nicht entweichen können.

Die Auflageschicht kann aus einem Abstandstextil gebildet sein, das aus mindestens zwei Flächengebilden und einer zwischen den Flächengebilden angeordneten und diese verbindenden Abstandsstruktur besteht, wobei die Flächengebilde und die Abstandsstruktur derart ausgebildet sind, dass die in Richtung der Schichtdicke durch die Auflageschicht verlaufenden Poren bzw. Kanäle bereitgestellt werden.

Ein solches Abstandstextil kann als Abstandsgewebe, -gewirke oder -gestricke ausgebildet sein. Das an der körperzugewandten Seite angeordnete Flächengebilde des Abstandstextils weist eine solche Lochgröße auf, dass Floheier durchfallen bzw. frisch geschlüpfte Larvenstadien aufgrund des angeborenen geotropen oder photophoben Verhaltens durchwandern können, jedoch die erwachsenen Flöhe dieses Abstandstextil nicht mehr verlassen können und darin verhungern bzw. durch einen eventuellen Waschvorgang abgetötet werden. Die Lochgröße in diesem körperzugewandten Flächengebilde kann beispielsweise im Bereich von 200 bis 900 µm, bevorzugt 200 bis 600 µm sein. Die Abstandsstruktur begünstigt die Thigmotaxis der Flohlarven, da diese entlang der Abstandsfäden in die Tiefe des Abstandstextils streben. Solche Abstandsfäden können aus Einzelfilamenten oder aus Filamentbündeln bestehen. Ihre Anzahl und ihr Durchmesser werden entsprechend den gewünschten Eigenschaften des Abstandstextils, wie beispielsweise der Stauchhärte, gewählt.

Um bestimmte Elastizitätsgrade der Auflageschicht bzw. der Liegeunterlage vorzusehen, können selbstverständlich auch mehrere Lagen Abstandstextil, die gleich oder verschieden sein können, vorgesehen sein.

Alternativ dazu kann die Auflageschicht der Liegeunterlage durch Schnüre, Stabrost, Gitter, Lochplatte etc. gebildet sein.

In einer weiteren Ausführungsform kann an der körperabgewandten Seite der Auflageschicht eine Schicht Permanentklebstoff angeordnet sein, sodass über die Poren bzw. Kanäle der Auflageschicht klebrige Flächen zugänglich sind, die zur Immobilisierung von Entwicklungsstadien der Ektoparasiten dienen. Als Beispiele für Klebstoffe mit Dauerklebrigkeit, die zur Verwendung in der erfindungsgemäßen Liegeunterlage geeignet sind, können die von Fliegenfallen bekannten Leimkleber bzw. moderne Produkte, wie Euromelt 774-21 Schmelzkleber der Firma Henkel oder Fastbond® 49 PSA-Dispersionsklebstoff der Firma 3M, genannt werden.

Die erfindungsgemäße Liegevorrichtung und Liegeunterlage unter Verwendung von Abstandstextilien ist auch dann besonders vorteilhaft, wenn Insektizide verwendet werden, die über die Hautschuppen des Tieres wirken. Solche Insektizide werden z.B. als Imidacloprid unter der Handelsbezeichnung Advantage der Firma Bayer AG oder als Selamectin unter der Handelsbezeichnung Stronghold der Firma Pfizer Inc. vertrieben. Die Wirkstoffe reichern sich in den Hautschuppen an und gelangen mit diesen auf die Liegeunterlage, wo sie gegen die Flöhe und deren Entwicklungsstadien ihre Wirkung entfalten. Bei herkömmlichen Liegeunterlagen wie z.B. offenporigen Schaumstoffen, Textilien, Filzen etc. werden beim Absaugen zu Reinigungszwecken auch diese Hautschuppen abgesaugt, sodass die Insektizidwirkung ebenfalls verschwindet. Das Abstandstextil hingegen kann oberflächlich gereinigt und abgesaugt werden, ohne die in das Abstandstextil eingedrungenen Hautschuppen zu entfernen, sodass die Wirkung beibehalten wird. Bei solchen Insektiziden kann die Klebeschicht auch entfallen. Die zuvor genannten Insektizide lassen sich auch auf die Liegeunterlage aufsprühen, bevorzugt auf die körperabgewandte Seite.

Die Wirkung der Liegeunterlage kann noch dadurch verstärkt werden, dass das Material des Abstandstextils elektrostatisch aufgeladen ist, wie es z.B. bei Polyester möglich ist.

Die erfindungsgemäße Liegeunterlage kann entweder alleine oder in Kombination mit einer Liegevorrichtung gemäß der vorliegenden Erfindung verwendet werden. Die erfindungsgemäße Liegeunterlage ist besonders für Heimtiere, beispielsweise Hunde, Katzen etc., aber auch für andere Tiere geeignet. Selbstverständlich kann sie auch von Menschen benutzt werden.

Die Erfindung schlägt eine Liegevorrichtung mit einer Auflagefläche für das Tier, welche von der erfindungsgemäßen Liegeunterlage bedeckt sein kann, und mit einem die Auflagefläche umgebenden Randabschnitt vor.

Erfindungsgemäß ist die Liegeunterlage dicht in der Liegevorrichtung eingeschlossen. Dies erfolgt beispielsweise dadurch, dass im Übergangsbereich zwischen der Auflagefläche der Liegevorrichtung und dem Randabschnitt eine hinterschnittene nutförmige Ausnehmung für die Aufnahme der erfindungsgemäßen Liegeunterlage vorgesehen ist, um zu verhindern, dass Floheier bzw. -larven zwischen dem Randabschnitt und der Liegeunterlage hindurch und unter die Liegeunterlage gelangen können. Alternativ dazu kann eine im Bereich des Bodens geteilte Ausführung verwendet werden, die aus einem Randabschnitt und einem separaten Bodenabschnitt besteht.

Eine erfindungsgemäße Liegevorrichtung kann beispielsweise aus Form- oder Integralschaum ausgebildet sein. Sie kann eine glatte, beflockte oder bezogene Oberfläche haben.

Die erfindungsgemäße Liegevorrichtung kann jede beliebige Form haben und ist vorzugsweise rechteckig oder oval ausgeführt. Sie kann als Liege- bzw. Aufenthaltskorb für Tiere ausgeführt sein. Sie kann der untere Abschnitt einer Höhle sein, wie sie beispielsweise auf Kratzbäumen für Katzen Verwendung finden. Selbstverständlich kann die Liegevorrichtung auch der untere Abschnitt eines Transportbehältnisses für Tiere sein.

Gemäß einem weiteren Merkmal der Erfindung können die Liegevorrichtung und/oder die Liegeunterlage mit Insektizid bzw. Wachstumshemmer (Ovizid bzw. Larvizid) und/oder Insektenlockstoffen bzw. Duftstoffen behandelt sein oder solche Stoffe in der optionalen Klebeschicht aufweisen.

Ein besonderer Vorteil der Erfindung besteht darin, dass die erfindungsgemäße Liegeunterlage ausgetauscht werden kann, sobald ihre Wirksamkeit bei der Inaktivierung von Ektoparasiten nachlässt. Die Liegeunterlage kann auch einfach gereinigt, beispielsweise gewaschen, werden.

Nachstehend wird die Erfindung an Ausführungsbeispielen anhand der Zeichnungen näher erläutert. In den Zeichnungen zeigt Fig. 1 eine Ausführungsform einer erfindungsgemäßen Liegeunterlage im Schnitt. Fig. 2 zeigt ein Detail einer Auflageschicht der erfindungsgemäßen Liegeunterlage. Die Fig. 3 bis 6 zeigen verschiedene Ausführungsformen der Auflageschicht der Liegeunterlage. Die Fig. 7 bis 9 zeigen erfindungsgemäße Liegevorrichtungen in Draufsicht. Die Fig. 10 bis 12 zeigen jeweils einen Detailbereich von Ausführungsformen der erfindungsgemäßen Liegevorrichtung in Schnittansicht.

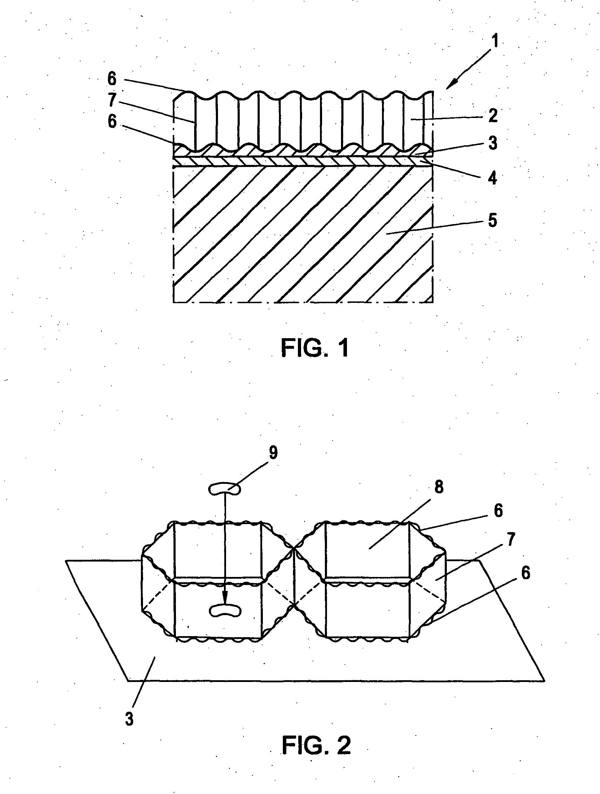

Die Fig. 1 zeigt eine Ausführungsform der erfindungsgemäßen Liegeunterlage 1, die aus einer Auflageschicht 2, einer optionalen Schicht Permanentklebstoff 3, einer ebenfalls optionalen Trägerschicht 4 und einer Unterlagsschicht 5 besteht. Die Auflageschicht 2 ist vorzugsweise ein Abstandstextil, das aus zwei Gewebelagen 6 und dazwischen angeordneten und die Gewebelagen verbindenden Abstandsfäden 7 besteht.

Die Fig. 2 zeigt eine Detailansicht einer Auflageschicht 2. Die Auflageschicht 2 weist in Richtung der Schichtdicke verlaufende Poren bzw. Kanäle 8 auf, die durch Aussparungen in den Gewebelagen 6 und die Abstandsfäden 7 gebildet werden und beliebigen Verlauf und beliebigen Querschnitt haben können. Bei der Benützung der Liegeunterlage werden verschiedene Entwicklungsstadien des zu bekämpfenden Ektoparasiten, beispielsweise Larven 9, darauf abgelegt. Diese Larven 9 gelangen durch die Poren bzw. Kanäle 8, in Richtung des Pfeils in der Fig. 2, zur unteren Gewebelage 6.

In einer Ausführungsform liegt die untere Gewebelage 6 auf einer Klebeschicht 3 auf, wodurch die Entwicklungsstadien 9 der Ektoparasiten durch Klebewirkung immobilisiert werden. Der spezielle Aufbau der Auflageschicht bewirkt, dass das Tier beim Benützen der Liegeunterlage nicht mit dem Fell an der klebrigen Fläche der Klebeschicht 3 haften bleibt, dass aber die verschiedenen Entwicklungsstadien 9 der Flöhe die klebrige Fläche problemlos erreichen können.

In einer Ausführungsform können die in Richtung der Schichtdicke verlaufenden Poren bzw. Kanäle 8 an der körperzugewandten Seite geringeren Querschnitt haben als an der körperabgewandten Seite, sodass Entwicklungsstadien 9 der Ektoparasiten in die Auflageschicht 2 eindringen, erwachsene Flöhe aber nicht nach oben austreten können.

Erfindungsgemäß kann vorgesehen sein, dass die Liegeunterlage 1 am Rand dicht abgeschlossen ist, um auch dort ein Austreten von Ektoparasiten bzw. ihren Entwicklungsstadien zu verhindern. In einer Ausführungsform der Liegeunterlage 1 ist die Auflageschicht 2 mit einer an der körperabgewandten Seite angeordneten Unterlagsschicht 5 im Randbereich verbunden, sodass der gesamte Aufbau stirnseitig abgeschlossen ist. Das kann beispielsweise durch Verschweißen oder Vernähen erfolgen.

In einer anderen Ausführungsform der Erfindung kann die Auflageschicht 2 auch aus Schnüren gebildet sein, die im Abstand angeordnet sind. Solche Schnüre können auch sich unter einem beliebigen Winkel überkreuzend angeordnet sein. Die in Richtung der Schichtdicke der Auflageschicht 2 verlaufenden Kanäle 8 werden in einer solchen Ausführungsform durch die Zwischenräume zwischen den Schnüren gebildet.

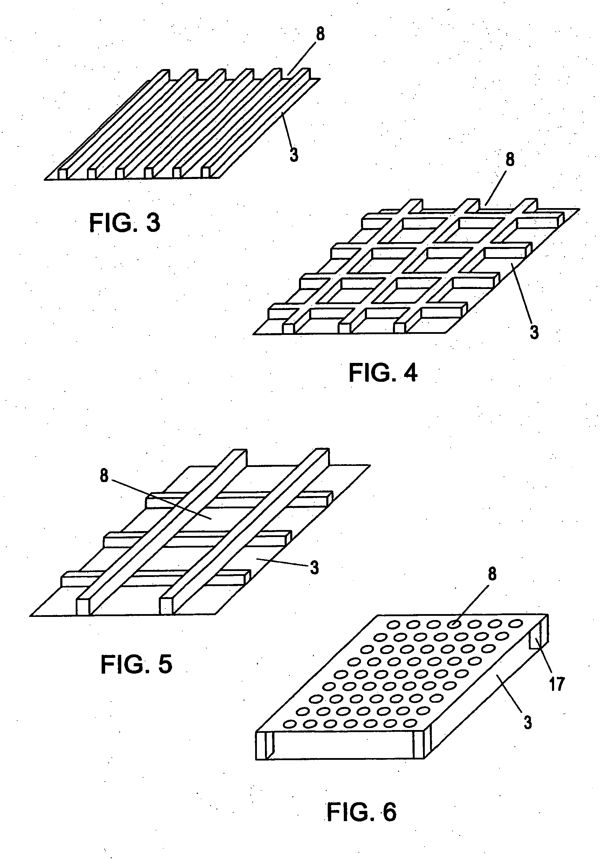

Die Auflageschicht 2 kann auch als Stabrost ausgebildet sein, wie in Fig. 3 dargestellt, wobei die Kanäle 8 durch die zwischen den Stäben verbleibenden Zwischenräume gebildet werden. Die Stäbe können beliebigen Querschnitt haben.

Die Auflageschicht 2 kann auch eine Gitterkonstruktion sein, wie beispielsweise in Fig. 4 dargestellt. Eine solche Gitterkonstruktion kann aus Längs- und Querstäben von beliebigem Querschnitt, die sich unter einem beliebigen Winkel schneiden können, gebildet werden. Die Kanäle 8 werden in einer solchen Ausführungsform durch die unterschiedlichen Verlauf und Querschnitt aufweisenden Zwischenräume zwischen den Stäben gebildet.

In einer weiteren Ausführungsform kann die Auflageschicht 2 auch durch auf Längsstäben aufliegende Querstäbe gebildet sein, wie beispielsweise in der Fig. 5 dargestellt. Die Stäbe können beliebigen Querschnitt haben. Die zwischen den Stäben verbleibenden Zwischenräume bilden die Kanäle 8 und können unterschiedliche Gestalt haben.

Eine weitere Ausführungsform der Erfindung ist in Fig. 6 dargestellt, in der die Auflageschicht 2 als ein auf Abstandselementen 17 aufliegendes Flächenelement, wie eine Lochplatte, ausgebildet ist. Die Abstandselemente 17 können unterschiedlich ausgestaltet sein. Alternativ dazu kann auch eine sich über die gesamte Dicke des Auflageschicht 2 erstreckende Lochplatte vorgesehen sein.

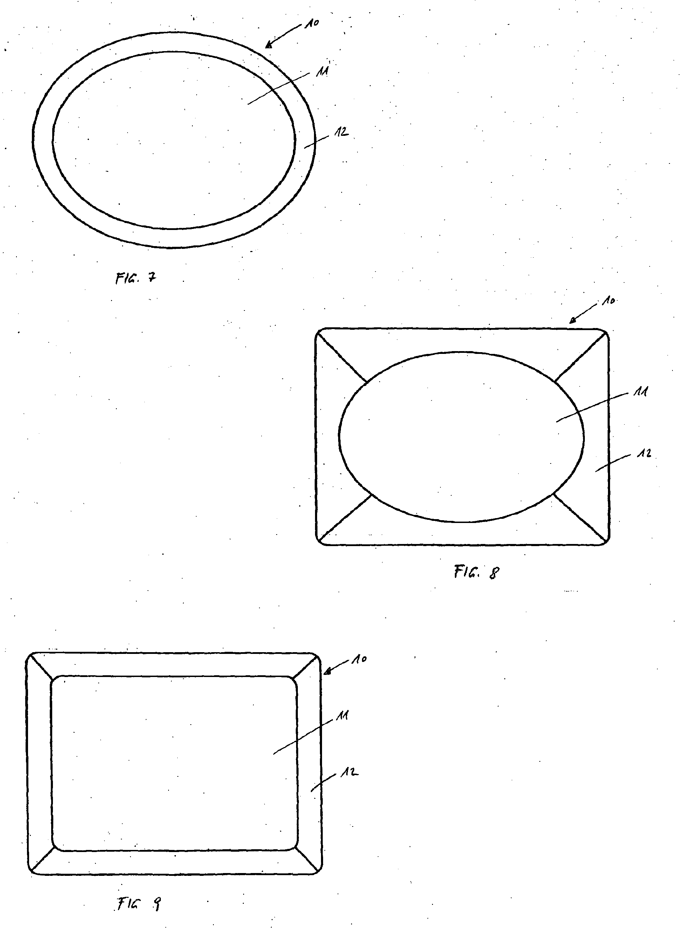

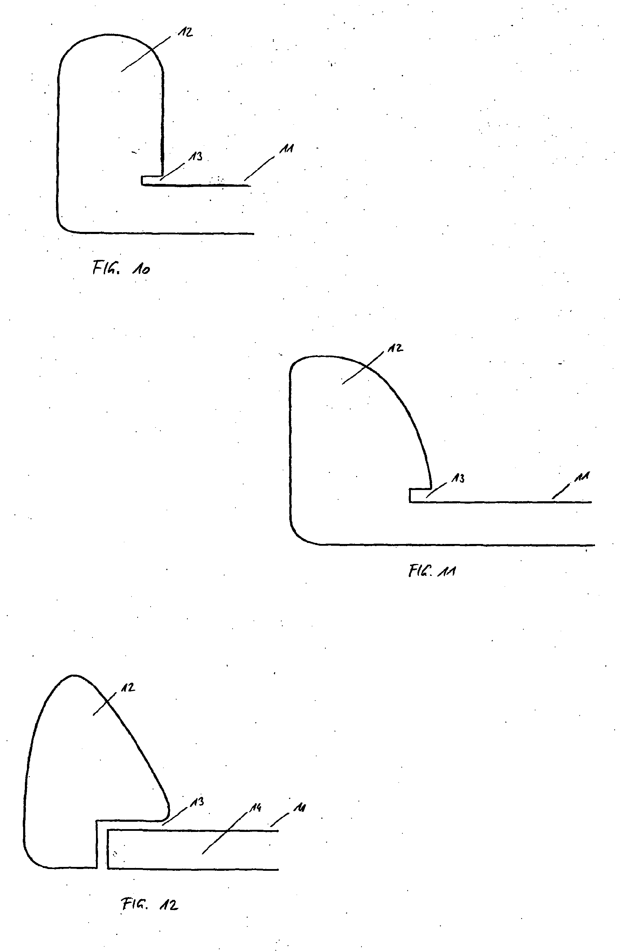

Die Fig. 7 bis 9 zeigen Beispiele für verschiedene Ausführungsformen der erfindungsgemäßen Liegevorrichtung 10 in Draufsicht. Ein Randabschnitt 12 umgibt die als Liegemulde ausgebildete Auflagefläche 11 für das Tier, die vorzugsweise von einer erfindungsgemäßen Liegeunterlage 1 bedeckt wird. Die Liegevorrichtung 10 kann beliebige Form haben, d.h. sie kann rechteckig, oval, rund etc. sein.

Die Fig. 10 und 11 zeigen jeweils einen Detailbereich von verschiedenen Ausführungsformen der erfindungsgemäßen Liegevorrichtung 10. Im Übergangsbereich vom Randabschnitt 12 zur Auflagefläche 11 ist jeweils eine hinterschnittene nutförmige Ausnehmung 13 für die Liegeunterlage 1 vorgesehen, sodass die Liegeunterlage 1 in der Liegevorrichtung 10 dicht eingeschlossen ist und Eier oder Larven 9 der Ektoparasiten nicht unter die ihrerseits stirnseitig abgeschlossene Liegeunterlage 1 gelangen können.

Die Fig. 12 zeigt einen Detailbereich einer weiteren Ausführungsform der erfindungsgemäßen Liegevorrichtung 10 im Schnitt. Hier ist eine im Bereich des Bodens geteilte Ausführung vorgesehen, die aus einem Randabschnitt 12 und einem separaten Bodenabschnitt 14 besteht. Nach dem Zusammensetzen dieser beiden Teile befindet sich die Liegeunterlage in einer Ausnehmung 13 im Übergangsbereich vom Randabschnitt 12 zum Bodenabschnitt 14, wodurch der gewünschte dichte Abschluss entsteht.

In einer alternativen Ausführungsform kann der Bodenabschnitt wannenförmig ausgebildet sein und die erfindungsgemäße Liegeunterlage 1 auf der Auflagefläche 11 durch einen in die Wanne eingesetzten Randabschnitt an ihren Rändern eingeklemmt werden.

## Patentansprüche

1. Liegevorrichtung zur Inaktivierung von Ektoparasiten, insbesondere für die Liegestellen von Tieren, mit einer Auflagefläche für das Tier, **dadurch gekennzeichnet, dass** in der Auflagefläche eine Liegeunterlage (1) vorgesehen ist, welche die von dem Tier herabfallenden Ektoparasiten bzw. deren Entwicklungsstadien inaktiviert, wobei die Liegeunterlage eine Auflageschicht (2) mit im Wesentlichen nach unten verlaufenden Poren bzw. Kanälen (8) für die Aufnahme der Ektoparasiten bzw. ihrer Entwicklungsstadien und gegebenenfalls von Hautbestandteilen des Tieres aufweist, welche Poren bzw. Kanäle (8) an ihrem unteren Ende gegebenenfalls an einer Klebeschicht (3) enden.

2. Liegevorrichtung nach Anspruch 1, **dadurch gekennzeichnet, dass** die Poren bzw. Kanäle (8) in der Auflageschicht (2) der Liegeunterlage (1) an der körperzugewandten Seite einen kleineren Querschnitt haben als an der körperabgewandten Seite.

3. Liegevorrichtung nach einem der vorhergehenden Ansprüche, **dadurch gekennzeichnet, dass** an der körperabgewandten Seite der Auflageschicht (2) eine Unterlagsschicht (5) angeordnet ist, mit der die Auflageschicht (2) im Randbereich verbunden ist, sodass die Liegeunterlage (1) stirnseitig abgeschlossen ist.

4. Liegevorrichtung nach einem der vorhergehenden Ansprüche, **dadurch gekennzeichnet, dass** die Liegeunterlage (1) in der Liegevorrichtung dicht eingeschlossen ist.

5. Liegevorrichtung nach einem der vorhergehenden Ansprüche, **dadurch gekennzeichnet, dass** die Auflageschicht (2) der Liegeunterlage aus einem Abstandstextil gebildet ist.

6. Liegevorrichtung nach Anspruch 4, **dadurch gekennzeichnet, dass** das Abstandstextil als Abstandsgewebe, -gewirke oder -gestricke ausgebildet ist.

7. Liegevorrichtung nach einem oder mehreren der vorhergehenden Ansprüche, **dadurch gekennzeichnet, dass** die Liegevorrichtung bzw. die Liegeunterlage mit einem Insektizid bzw. Wachstumshemmer (Ovizid bzw. Larvizid) und/oder Insektenlockstoffen bzw. Duftstoffen behandelt, wie z.B. besprüht, ist oder solche Stoffe in der optionalen Klebeschicht aufweist.

8. Liegevorrichtung nach einem der vorhergehenden Ansprüche, **dadurch gekennzeichnet, dass** die Liegeunterlage (1) von einem Randabschnitt (12) unter Bildung einer Liegevorrichtung dicht umgeben wird.

9. Liegeunterlage zur Inaktivierung von Ektoparasiten, insbesondere zur Verwendung in einer Liegevorrichtung nach einem oder mehreren der Ansprüche 1 bis 8, **dadurch gekennzeichnet, dass** die Liegeunterlage (1) eine dem Körper zugewandte Auflageschicht (2) aufweist, die mit in Richtung der Schichtdicke verlaufenden Poren bzw. Kanälen (8) versehen ist, welche an ihrem unteren Ende gegebenenfalls an einer Klebeschicht (3) enden.

10. Liegeunterlage nach Anspruch 9, **dadurch gekennzeichnet, dass** die in Richtung der Schichtdicke der Auflageschicht (2) verlaufenden Poren bzw. Kanäle (8) an der körperzugewandten Seite einen geringeren Querschnitt haben als an der körperabgewandten Seite.

11. Liegeunterlage nach Anspruch 9 oder 10, **dadurch gekennzeichnet, dass** die Auflageschicht (2) aus einem Abstandstextil gebildet ist.

12. Liegeunterlage nach Anspruch 11, **dadurch gekennzeichnet, dass** das Abstandstextil als Abstandsgewebe, -gewirke oder -gestricke ausgebildet ist.

13. Liegeunterlage nach einem oder mehreren der Ansprüche 9 bis 12, **dadurch gekennzeichnet, dass** an der körperabgewandten Seite der Auflageschicht (2) eine Unterlagsschicht (5) angeordnet ist, mit der die Auflageschicht (2) im Randbereich verbunden ist, sodass die Liegeunterlage (1) stirnseitig abgeschlossen ist.

14. Liegeunterlage nach Anspruch 9 oder 10, **dadurch gekennzeichnet, dass** die Auflageschicht (2) durch Schnüre, Stabrost, Gitter, Lochplatte etc. gebildet ist.

15. Liegeunterlage nach einem oder mehreren der Ansprüche 9 bis 14, **dadurch gekennzeichnet, dass** sie mit einem Insektizid bzw. Wachstumshemmer (Ovizid bzw. Larvizid) und/oder Insektenlockstoffen bzw. Duftstoffen behandelt, wie z.B. besprüht, ist oder solche Stoffe in der optionalen Klebeschicht aufweist.

16. Liegeunterlage nach einem oder mehreren der Ansprüche 9 bis 15, **dadurch gekennzeichnet, dass** die in Richtung der Schichtdicke der Auflageschicht (2) verlaufenden Poren bzw. Kanäle (8) an der körperzugewandten Seite einen Querschnitt zwischen 200 µm und 600 µm aufweisen.

17. Liegeunterlage oder Liegevorrichtung nach einem oder mehreren der vorhergehenden Ansprüche, **dadurch gekennzeichnet, dass** die Auflageschicht (2) elektrostatisch aufgeladen ist.
